# EUROPÄISCHE PATENTANMELDUNG

(11) **EP 2 719 495 A1**
(43) Veröffentlichungstag der Anmeldung: **16.04.2014**
(21) Anmeldenummer: 12188175.9
(22) Anmeldetag: 11.10.2012
(51) Int. Cl.: B23K 35/30, C22C 19/05

(54) **Nickelbasissuperlegierung mit verbessertem Schutz gegenüber Heißgaskorrosion und Oxidation, Bauteil und Verfahren**

(71) Anmelder: Siemens Aktiengesellschaft, 80333 München (DE)
(72) Erfinder: Die Erfindernennung liegt noch nicht vor

(57) **Zusammenfassung**

Die Erfindung zeigt eine deutlich verbesserte Nickelbasissuperlegierung bezüglich Oxidation- und Korrosionsbeständigkeit.

## Beschreibung

Die Erfindung betrifft eine Nickelbasissuperlegierung, die verbesserte thermische, mechanische oxidative und korrosive Eigenschaften aufweist.

Nickelbasissuperlegierungen werden sehr häufig für Turbinenschaufeln von Gasturbinen verwendet.

Auch wenn diese Schaufel-Schutzschichten gegen Oxidation, Korrosion und/oder Wärme (Keramik) aufweisen, ist ein Substrat mit gutem Oxidationsschutz und Korrosionsschutz von Vorteil sollte einmal das Schichtsystem versagen.

Ebenso werden Nickelbasissuperlegierungen verwendet als Schweißzusatzwerkstoff um vorhandene Substrate aus Nickelbasissuperwerkstoffen zu reparieren, wobei die Anforderungen dieselben sind.

Es ist daher Aufgabe der Erfindung eine Nickelbasissuperlegierung aufzuzeigen, die verbesserte Eigenschaften bezüglich Korrosionsschutz und Oxidationsschutz aufweist.

Außerdem ist es Aufgabe eine Legierung aufzuzeigen, die sich beim Auftragen eine gute Schweißbarkeit und eine erhöhte Aufbaurate ermöglicht.

Die Aufgabe wird gelöst durch eine Legierung gemäß Anspruch 1, ein Bauteil gemäß Anspruch 2 und ein Verfahren gemäß Anspruch 3.

Die Nickelbasissuperlegierungen weist folgende Elemente auf (in Gew.%):

| | | |
|---|---|---|
| Kobalt | 7,5 | ± 0,1 |
| Molybdän | 1,5 | ± 0,1 |
| Wolfram | 2,8 | ± 0,1 |
| Tantal | 3,8 | ± 0,1 |
| Aluminium | 4,5 | ± 0,1 |
| Titan | 0,75 | ± 0,01 |
| Bor | max 0,002 | |
| Zirkon | 0,05 | ± 0,01 |
| Hafnium | 0,1 | ± 0,01 |
| Kohlenstoff | 0,04 | ± 0,01 |
| Chrom | 16,5 | ± 0,1 |
| Schwefel | max 0,0002 | |
| Yyttrium | 0,02 | ± 0,01 |
| Silizium | 0,5 | ± 0,01 |
| Nickel | Rest | |

Diese Legierung kann ein Substratmaterial bilden oder als Zusatzwerkstoff für die bekannte Nickelbasissuperlegierungen wie Rene 80 oder IN738 bzw. IN739 verwendet werden.

Ebenso vorzugsweise kann durch die bevorzugte Auswahl von Zirkon, Hafnium und den weiteren kleineren (< 1Gew.%) Elementanteilen diese Legierung als Schweißzusatzwerkstoff verwendet werden, die auf ein entsprechendes Bauteil mit einer Nickelbasissuperlegierung aufgetragen wird.

## Patentansprüche

1. Nickelbasissuperlegierung,
aufweisend (in Gew.%)
Kobalt (Co) : (7, 5 ± 0, 1) %,
Molybdän (Mo): (1,5 ± 0,1)%,
Wolfram (W): (2,8 ± 0,1) %,
Tantal (Ta): (3,85 ± 0,1) %,
Aluminium (Al): (4,5 ± 0,1) %,
Titan (Ti): (0,75 ± 0,1) %,
Bor (B): max 0,002 %,
Zirkon (Zr): (0,05 ± 0,01) %,
Hafnium (Hf) : (0,1 ± 0,01) %,
Kohlenstoff (C): (0,04 ± 0,01) %,
Chrom (Cr): (16,5 ± 0,1) %,
Schwefel (S): max 0,0002 %,
Yttrium (Y): (0,02 ± 0,01) %,
Silizium (Si): (0,5 ± 0,1) %,
Rest Nickel.

2. Bauteil,
das als Substrat eine nickel- oder kobaltbasierte Superlegierung aufweist und eine Schweißung mit einer Legierung gemäß Anspruch 1.

3. Verfahren zur Reparatur eines nickelbasierten- oder kobaltbasierten Substrats, bei dem ein Schweißzusatzwerkstoff einer Legierung gemäß Anspruch 1 aufgetragen wird.
